Europäisches Patentamt

European Patent Office

Office européen des brevets

(19)

(11) **EP 1 117 954 B1**

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(51) Int Cl.$^7$: **F16H 61/14**

(21) Anmeldenummer: **99969776.6**

(22) Anmeldetag: **22.09.1999**

(86) Internationale Anmeldenummer:
**PCT/EP99/07041**

(87) Internationale Veröffentlichungsnummer:
**WO 00/19132 (06.04.2000 Gazette 2000/14)**

(54) **MOTORDREHZAHLFÜHRUNG ÜBER DIE WANDLERÜBERBRÜCKUNGSKUPPLUNG BEI EINEM STUFENLOSEN GETRIEBE**

ENGINE SPEED CONTROL VIA THE TORQUE CONVERTER LOCKUP CLUTCH OF A CONTINUOUSLY VARIABLE DRIVE

COMMANDE DU REGIME MOTEUR PAR COUPLAGE DE PONTAGE DU CONVERTISSEUR DANS LE CAS D'UNE TRANSMISSION VARIABLE

(84) Benannte Vertragsstaaten:
**BE DE FR GB SE**

(30) Priorität: **28.09.1998 DE 19844440**

(43) Veröffentlichungstag der Anmeldung:
**25.07.2001 Patentblatt 2001/30**

(73) Patentinhaber: **ZF Batavia, L.L.C.**
**Batavia, OH 45103 (US)**

(72) Erfinder:
• **VORNDRAN, Ralf**
**D-88097 Eriskirch (DE)**

• **DANZ, Wolfgang**
**D-88046 Friedrichshafen (DE)**
• **PIEPENBRINK, Andreas**
**D-88709 Meersburg (DE)**
• **SCHWENGER, Andreas**
**D-88048 Friedrichshafen (DE)**

(74) Vertreter: **Zietlow, Karl-Peter**
**ZF FRIEDRICHSHAFEN AG**
**88038 Friedrichshafen (DE)**

(56) Entgegenhaltungen:
**EP-A- 0 833 085       DE-A- 19 631 071**
**DE-C- 19 645 984       US-A- 5 160 003**

EP 1 117 954 B1

**Beschreibung**

Die vorliegende Erfindung betrifft ein Verfahren zur Motordrehzahlführung über die Wandlerüberbrückungskupplung in Kombination mit weiteren Elementen des Antriebsstrangs bei einem stufenlosen Getriebe gemäß dem Oberbegriff des Patentanspruchs 1.

Hydrodynamische Drehmomentwandler in automatischen Getrieben erfüllen die Aufgabe, einen komfortablen Anfahrvorgang bei ausreichender Anfahrleistung zu gewährleisten. Desweiteren werden mittels der hydrodynamischen Drehmomentwandler die Motor-Drehschwingungen vom Triebstrang abgekoppelt. Die Wirkungsgradverluste, die aus dem Einsatz eines hydrodynamischen Drehmomentwandlers resultieren werden durch Wandlerüberbrückungskupplungen reduziert.

Bei den herkömmlichen Verfahren zur Ansteuerung der Wandlerüberbrückungskupplung bei Stufen- und stufenlosen Automatgetrieben wird der Wandler beim Anfahren über drehzahlabhängige Kennlinien geschlossen. Bedingt durch die Momentenunterschiede von An-und Abtriebsseite wird dabei der Wandler zu Beginn des Anfahrvorgangs zunächst "aufgezogen", was allgemein in der Entstehung einer signifikanten Drehzahldifferenz zwischen Motordrehzahl und Turbinendrehzahl resultiert. Diese Drehzahldifferenz ist von der Wandlercharakteristik (weich/hart) abhängig und kann deutlich über 1000 Umdrehungen pro Minute liegen.

Speziell im unteren Lastbereich entsteht beim üblichen, kennliniengesteuerten Schließen der Wandlerüberbrükkungskupplung , bedingt durch den allgemein tiefer liegenden Soll-Betriebspunkt, ein deutlich negativer Motordrehzahlgradient. Für den Fahrer ist das Schließen der Wandlerüberbrückungskupplung dann als extrem störende Überhöhung ("Overshoot") spürbar, was sich zudem im Verbrauch negativ niederschlägt.

Des weiteren entsteht bei einem herkömmlichen kennliniengesteuerten Getriebe im Schubbetrieb beim Öffnen der Wandlerüberbrückungskupplung das übliche "Durchtauchen" der Motordrehzahl unter der Turbinendrehzahl, eine Tatsache, die vom Fahrer allgemein als störend empfunden wird.

Die DE 196 31 071 A1 der Anmelderin offenbart ein Steuersystem für ein stufenlos verstellbares Getriebe. Hierbei wird das Ein- oder Ausrücken der Wandlerüberbrükkungskupplung (WK) als Funktion der Führung der Motor-Soll-Drehzahl implementiert. Dieses Verfahren ermöglicht es, die Überhöhung der Motordrehzahl beim Anfahren zu reduzieren.

Die Motordrehzahlüberhöhung kann jedoch damit nicht vollständig beherrscht werden: es ist zu Beginn der Regelphase ein deutlicher Anstieg der Motordrehzahl zu erkennen. Ursache für diesen Effekt sind die Reaktionszeiten des Wandlers auf eine äußere Ansteuerung, die einige hundert msec betragen, da zuerst Öl-Umlagerungsvorgänge (Umsteuerung WK-Auf-Betrieb in WK-Zu-Betrieb) durchgeführt werden müssen.

Erst nachdem die Öl-Umlagerungsvorgänge im Wandler abgeschlossen sind, kann die Wandlerüberbrückungskupplung das zur Motordrehzahlführung entlang der Trajektorie notwendige Moment aufbauen. Bei einer angenommenen Zeitkonstante von 50 msec für Druckauf- und Abbau vergehen in diesem Beispiel ca. 200 msec bis die Wandlerüberbrückungskupplung den gewünschten Durchgriff erhält. Die normalen Durchschnittsreaktionszeiten liegen noch deutlich darüber. Während dieser Zeit besteht kein Einfluß auf das Verhalten der Wandlerüberbrückungskupplung, so dass auch keine Führung der Motordrehzahl im Sinne der vorliegenden Anmeldung möglich ist.

Bei herkömmlichen Getrieben nach dem Stand der Technik können verschiedene Umstände bewirken, dass die Wandlerüberbrückungskupplung nicht vollständig geöffnet wird, wodurch beim Anhalten ein Absterben des Motors verursacht wird.

Der vorliegenden Erfindung liegt daher die Aufgabe zugrunde, ausgehend von dem erwähnten Stand der Technik, ein Verfahren zur Steuerung der Motordrehzahl über die Wandlerüberbrückungskupplung zu schaffen, welches während der Anfahrphase eine sofortige Reaktion der Wandlerüberbrückungskupplung und somit optimalen Komfort bei ausreichender Anfahrleistung gewährleistet und bei der Anhaltephase ein "Abwürgen" des Motors aufgrund einer Fehlfunktion der Wandlerüberbrückungskupplung sowie das Absinken der Motordrehzahl unterhalb der Turbinendrehzahl im Schubbetrieb vermeidet.

Insbesondere soll die oben erwähnte Überhöhung der Motordrehzahl beim Anfahren weitestgehend reduziert werden.

Darüber hinaus soll das erfindungsgemäße Verfahren kostengünstig und einfach realisierbar sein.

Diese Aufgabe ist gemäß der Erfindung durch die Merkmale des Patentanspruchs 1 gelöst. Weitere Ausgestaltungen der Erfindung gehen aus den Unteransprüchen hervor.

Dementsprechend wird vorgeschlagen, das Schliessen und Öffnen der Wandlerüberbrückungskupplung als implizite Funktion zu verwenden, derart, dass durch eine möglichst asymptotische Angleichung der Drehzahlgradienten von Motor und Turbine beim Anfahren und durch ein weiches, definiertes Auseinanderführen der Drehzahlverläufe von Motor und Turbine beim Anhalten ein optimaler Komfort gewährleistet wird, und die Reaktionszeiten des Wandlers dadurch zu minimieren, dass beim Stillstand des Fahrzeugs die Vorwärtskupplung in den Standabkopplungsbetrieb versetzt wird, so dass die Wandlerüberbrückungskupplung vollständig geschlossen werden kann.

Hierbei wird beim Anfahren die Motordrehzahl durch die Wandlerüberbrückungskupplung an einer definierter Trajektorie angenähert, wobei am Ende der Trajektorie die Motordrehzahl gleich der Turbinendrehzahl ist. Folglich wird die Überhöhung der Motordrehzahl beim Anfahren reduziert sowie ein ruckfreies komfortables Schliessen der Wandlerüberbrückungskupplung gewährleistet.

Gemäß der vorliegenden Erfindung ist vorgesehen, die Überhöhung der Motordrehzahl zu Beginn der Regelphase beim Anfahren zusätzlich zu reduzieren, indem die Reaktionszeiten des Wandlers auf eine äußere Ansteuerung, die mehrere hundert msec betragen können, minimiert werden.

Erst nachdem die Öl-Umlagerungsvorgänge im Wandler abgeschlossen sind, kann die Wandlerüberbrückungskupplung das zur Motordrehzahlführung entlang der Trajektorie notwendige Moment aufbauen. Für die möglichst frühzeitige Führung der Motordrehzahl beim Anfahrvorgang ist es folglich notwendig, dass die Wandlerüberbrückungskupplung direkt zu Beginn der Regelphase schon Durchgriff auf das System erhält. Erfindungsgemäß wird vorgeschlagen, die zeitaufwendigen Öl-Umlagerungsvorgänge im.Wandler im Vorfeld schon abzuschliessen und die Wandlerüberbrückungskupplung in Aktionsbereitschaft zu halten.

Dies wird im Rahmen der vorliegenden Erfindung dadurch erreicht, dass die Wandlerüberbrückungskupplung im Stillstand des Fahrzeugs im Zusammenspiel mit der Vorwärtskupplung betrieben wird.

Dabei soll die Vorwärtskupplung in "Standabkopplung" (SBC, Stand By Control) betrieben werden, was es ermöglicht, die Wandlerüberbrückungskupplung in diesem Bereich vollständig zu schließen.

Beim dem aus dem Stand der Technik bekannten SBC-Betrieb wird beim Stillstand des Fahrzeugs die Vorwärtskupplung (gilt in Position "R" auch für das entsprechende Schaltelement) gerade soweit geöffnet, dass das zum Anrollen notwendige Antriebsmoment im lastfreien Zustand gerade etwas unterhalb dem anstehenden Lastmoment liegt. Resultierend wird bei Betrieb in Position "D" ohne Betätigung der Fahrzeugbremse das für Automatikgetriebe typische Anrollen verhindert. Zusätzlich werden durch diese Maßnahme die Wirkungsgradverluste durch Verschiebung des Wandlerbetriebspunktes reduziert. Die SBC-Funktion bringt daher auch eine Verbrauchsreduzierung mit sich.

Die Verlustleistung und damit die anfallende Wärmebelastung an der Wandlerüberbrückungskupplung sind hiermit außerhalb des kritischen Bereichs.

Durch diese Vorgehensweise entfallen die Schaltkennlinien und Schwellwertabfragen zum Schließen und Öffnen der Wandlerüberbrückungskupplung.

Die im Rahmen der vorliegenden Erfindung angewandte definierte Führung des Motors hat den Vorteil, dass der für ein positives Fahrempfinden wesentliche Kompromiß zwischen Anfahrleistung und Drehzahlüberhöhung (Overshoot) in einer optimalen Art und Weise realisiert werden kann.

Außerdem resultiert das erfindungsgemäße Verfahren in einer Reduzierung des Kraftstoffverbrauchs.

Um ein sicheres Öffnen der Wandlerüberbrückungskupplung beim Anhalten zu gewährleisten, werden erfindungsgemäß Motordrehzahlsollwerte unterhalb einem definierten Schwellwert über der Leerlaufdrehzahl nicht zugelassen. Zusätzlich ist im Rahmen des erfindungsgemäßen Verfahrens vorgesehen, mittels einer Anhebung der Motorsoll-drehzahl bzw. Erhöhung des Übersetzungsollwertes ein frühzeitiges Öffnen der Wandlerüberbrückungskupplung einzuleiten.

Des weiteren wird vorgeschlagen, das im Schubbetrieb beim Öffnen der Wandlerüberbrückungskupplung übliche "Durchtauchen" der Motordrehzahl unter der Turbinendrehzahl, was vom Fahrer allgemein als störend empfunden wird, über eine definierte Motordrehzahlvorgabe und Führung der Wandlerüberbrückungskupplung gänzlich zu vermeiden. Die Motorsolldrehzahl wird dazu möglichst lange auf dem Turbinendrehzahlwert gehalten. Ist es aufgrund störender Randeffekte (z. B. Resonanzbrummen wegen der nahezu geschlossenen Wandlerüberbrückungskupplung im unteren Drehzahlbereich) nicht möglich, den Motordrehzahlsollwert allein durch die Wandlerüberbrückungskupplung-Führung oberhalb der Turbinendrehzahl zu halten, so kann auch hier durch Anhebung des Übersetzungsollwertes unterstützend eingegriffen werden.

Ein Abwürgen des Motors beim Anhalten, wenn die Wandlerüberbrückungskupplung nicht vollständig geöffnet werden kann, erfolgt erfindungsgemäß dadurch, dass ein Auftrennen des Antriebsstrangs bei Erkennen dieser Fehlfunktion der Wandlerüberbrückungskupplung über die Vorwärtskupplung erfolgt.

In diesem Fall dient die Motordrehzahltrajektorie, die normalerweise zur Führung der Wandlerüberbrückungskupplung herangezogen wird, als Vorgabewert für die Schlupfregelung der Vorwärtskupplung.

Die Erfindung ist im folgenden anhand der Zeichnung näher erläutert. In dieser stellen dar:

Fig. 1     eine Prinzipdarstellung des Anfahr- und Anhaltevorgangs nach den herkömmlichem Verfahren und

Fig. 2     eine Prinzipdarstellung des Anfahr- und Anhaltevorgangs nach dem Verfahren gemäß der vorliegenden Erfindung.

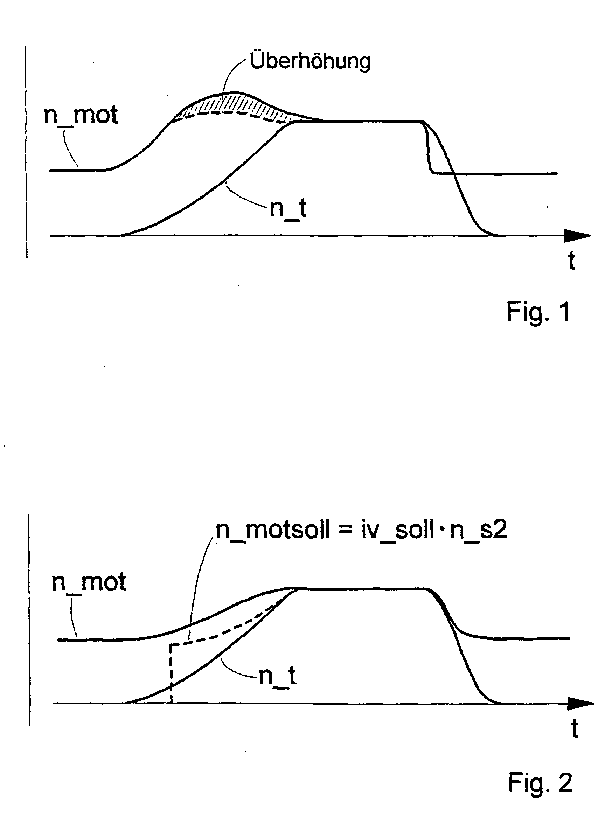

Fig. 1 zeigt einen Schliessvorgang der Wandlerüberbrückungskupplung nach dem Stand der Technik. Die Linie n_mot stellt dabei die Motordrehzahl dar, wobei die Linie n_t den Drehzahlverlauf der Turbine darstellt. Deutlich zu erkennen ist die Überhöhung der Motordrehzahl beim Anfahren. Dieser Bereich ist schraffiert dargestellt. Erst nach dem vollständigen Schliessen der Wandlerüberbrückungskupplung werden die Drehzahlen des Motors und der Turbine angeglichen.

Diese Überhöhung der Motordrehzahl während der Anfahrphase ist für den Fahrer extrem störend.

Ebenfalls in Fig. 1 ist der im Stand der Technik

übliche Effect des Durchtauchens der Motordrehzahl unter der Turbinendrehzahl im Schubbetrieb beim Öffnen der Wandlerüberbrückungskupplung illustriert. Auch dieser Effekt wird vom Fahrer allgemein als störend empfunden.

Fig. 2 illustriert den Anfahr- und Anhaltevorgang gemäß der vorliegenden Erfindung.

Die gestrichelt gezeichnete Linie ist die Soll-Motordrehzahltrajektorie n_mot_soll.

Der Sollwert für die Motordrehzahltrajektorie wird von der aktuellen Betriebspunktvorgabe für die Übersetzung gemäß der Gleichung

$$n\_mot\_soll = iv\_soll \cdot n\_s2$$

abgeleitet, wobei n_mot_soll die Soll-Motordrehzahl, iv_soll die Soll-Übersetzung und n_s2 die Drehzahl der Sekundärscheibe ist.

Durch die Minimierung der Reaktionszeiten des Wandlers aufgrund der erfindungsgemäßen Vorkonditionierung im Stillstand wird ein steiler Anstieg der Motordrehzahl zu Beginn der Regelphase vermieden.

Die Vorkonditionierung besteht darin, dass die zeitaufwendigen Öl-Umlagerungsvorgänge im Wandler im Vorfeld abgeschlossen werden, wodurch die Wandlerüberbrückungskupplung in Aktionsbereitschaft gehalten wird.

Dies geschieht durch Versetzen der Vorwärtskupplung in den SBC-Betrieb. Dadurch wird ein vollständiges Schliessen der Wandlerüberbrückungskupplung möglich.

Die nach dem Übergang der Vorwärtskupplung in den SBC-Betrieb geschlossene Wandlerüberbrückungskupplung wird im Rahmen des erfindungsgemäßen Verfahrens vom Ansteuerdruckniveau her nahe an ihrer Schlupfgrenze betrieben, um bei einem plötzlichen Anfahrvorgang, wozu die Vorwärtskupplung geschlossen werden muß, möglichst schnell geöffnet zu werden. Der Einfluß auf die Motordrehzahl ist entsprechend effektiv und das störende Überschwingen kann nahezu vollständig kompensiert werden.

Das Schließen der Vorwärtskupplung und der Übergang der Wandlerüberbrückungskupplung in den Motordrehzahlführungsbetrieb laufen dabei mittels einer Überschneidungsschaltung komplementär ab.

Die übergeordnete Fahrstrategie stellt dabei sicher, dass die Motordrehzahl zum Schließen der Wandlerüberbrückungskupplung auf die Turbinendrehzahl überführt wird.

Aus Fig. 2 wird deutlich, dass das Motordrehzahlniveau deutlich unter dem des schaltkennliniengeführten Schließvorgangs der Wandlerüberbrückungskupplung liegt. Der Motordrehzahlüberhöhungseffekt kann nahezu vollständig vermieden werden. Ebenfalls deutlich ist die weiche Angleichung der Drehzahlen von Motor und Turbine beim Schließen der Wandlerüberbrückungskupplung, gemäß der vorliegenden Erfindung.

Ein möglichst sicheres Öffnen der Wandlerüberbrückungskupplung beim Anhalten ist dadurch gewährleistet, dass Motordrehzahlsollwerte unterhalb einem definierten Schwellwert über der Leerlaufdrehzahl nicht zugelassen werden. Zur Unterstützung kann die Fahrstrategie mittels der Anhebung der Motorsolldrehzahl über die Übersetzungsvorgabe zusätzlich korrigierend eingreifen, um ein frühzeitiges Öffnen der Wandlerüberbrückungskupplung einzuleiten.

Das im Schubbetrieb beim Öffnen der Wandlerüberbrückungskupplung übliche "Durchtauchen" der Motordrehzahl unter der Turbinendrehzahl, wird - wie in Fig. 2 deutlich illustriert - über die definierte Motordrehzahlvorgabe und Führung der Wandlerüberbrückungskupplung gänzlich vermieden. Die Motorsolldrehzahl wird erfindungsgemäß möglichst lange auf dem Turbinendrehzahlwert gehalten.

Im Fall einer Fehlfunktion beim Öffnen der Wandlerüberbrückungskupplung erfolgt die notwendige Auftrennung des Antriebsstrangs über die Vorwärtskupplung, wobei die Motordrehzahltrajektorie als Vorgabewert für die Schlupfregelung der Vorwärtskupplung dient.

Sobald das Fahrzeug den Stillstand erreicht hat, geht die Motordrehzahlführungsfunktion der Vorwärtskupplung in den SBC-Betrieb über. Ist dieser Betriebszustand sicher erreicht, wird die Wandlerüberbrückungskupplung in den oben beschriebenen geschlossenen Betrieb an der Schlupfgrenze überführt. Folglich liegt im Stillstand immer der gleiche Betriebszustand von Vorwärtskupplung und Wandlerüberbrückungskupplung vor; dies erfolgt unabhängig davon, ob das Anhalten mit problemlos öffnender Wandlerüberbrückungskupplung oder nur unter Einsatz der vorgeschlagenen Ersatzfunktion über die Vorwärtskupplung durchgeführt wurde.

Für den Fall, dass die Wandlerüberbrückungskupplung während des Ablaufs der Ersatzfunktion über die Vorwärtskupplung plötzlich aufreißt, wird die Vorwärtskupplung in den Zustand "geschlossen" überführt. Dabei wird stets überwacht, ob die Wandlerüberbrückungskupplung geöffnet bleibt. Wird wieder ein Fahrzeugstillstand erkannt, so erfolgt bei offener Wandlerüberbrückungskupplung der Übergang der Vorwärtskupplung in den Standabkopplungsbetrieb und danach wird die Wandlerüberbrückungskupplung wieder in den geschlossenen Betrieb an der Schlupfgrenze überführt.

Wenn vor Erreichen des Fahrzeugstillstandes der Fahrer erneut Gas gibt (Durchstarten), wird zunächst die Vorwärtskupplung geschlossen und danach die Wandlerüberbrückungskupplung geschlossen, wobei wie bereits beschrieben die Wandlerüberbrückungskupplung auf der vorgegebenen Motordrehzahltrajektorie geführt wird.

Eine besonders vorteilhafte Variante der vorliegenden Erfindung sieht vor, dass um eine thermische Überlastung des Wandlerüberbrückungskupplung (sowie des gesamten Wandlers) zu vermeiden, während des gesamten "Rutschbetriebs" ständig die aktuelle Verlustleistung mitberechnet und mit einem vorgegebenen zulässigen Grenzwert verglichen wird. Bei Überschreitung dieses Grenzwertes wird die Wandlerüberbrückungskupplung geöffnet, um durch die jetzt erhöhte Durchströmung des Wandlers eine Abkühlung zu bewirken. Ist bei Überschreitung des Grenzwertes die Differenz zwischen Motor- und Turbinendrehzahl bereits auf einen sehr geringen Wert (z. B. 50 - 100 rpm) abgesunken, so kann die Wandlerüberbrückungskupplung auch ganz geschlossen werden, so dass ein weiterer Wärmeeintrag unterbunden wird.

Erst nach Ablauf einer an den Abkühlvorgang angepassten Sperrzeit wird die Wandlerüberbrückungskupplung wieder für den Schlupfbetrieb, und damit zur Führung der Motordrehzahl freigegeben.

Die Überwachung der thermischen Belastungsgrenzen erfolgt erfindungsgemäß über ein physikalisch-mathematisches Modell.

Wenn die Umstände dies erfordern, werden die erfindungsgemäßen Funktionen der Vorwärtskupplung von der Rüchwärtskupplung übernommen.

## Patentansprüche

1. Verfahren zur Steuerung der Motordrehzahlführung eines Motors eines einen Antriebsstrang aufweisenden Kraftfahrzeuges über eine Wandlerüberbrückungskupplung während der Anfähr- und Anhaltephase des Kraftfahrzeuges, wobei der Antriebsstrang einen eine Turbine und eine Wandlerüberbrückungskupplung enthaltenden hydrodynamischen Drehmomentwandler, ein stufenlos arbeitendes Getriebe und in Kombination damit weitere Elemente enthält, die eine Kupplung für Vorwärtsfahrt und eine Kupplung oder Bremse für Rückwärtsfahrt umfassen, **dadurch gekennzeichnet, daß** das Schließen und Öffnen der Wandlerüberbrückungskupplung als implizite Funktion verwendet wird, derart, daß durch eine möglichst asymptotische Angleichung der Drehzahlgradienten von Motor und Turbine beim Anfahren und durch ein weiches, definiertes Auseinanderführen der Drehzahlverläufe von Motor und Turbine beim Anhalten ein optimaler Komfort gewährleistet wird und daß beim Stillstand des Fahrzeugs die Kupplung für Vorwärtsfahrt in einen Standabkopplungsbetrieb versetzt wird, so daß die Wandlerüberbrückungskupplung vollständig geschlossen werden kann.

2. Verfahren nach Anspruch 1, **dadurch gekennzeichnet, daß** beim Anfahren die Motordrehzahl durch die Wandlerüberbrückungskupplung an einer definierter Trajektorie angenähert wird, wobei am Ende der Trajektorie die Motordrehzahl gleich der Turbinendrehzahl ist.

3. Verfahren nach Anspruch 2, **dadurch gekennzeichnet, daß** die Trajektorie gemäß

$$n\_mot\_soll = iv\_soll \cdot n\_s2$$

definiert wird, wobei n_mot_soll die Soll-Motordrehzahl, iv_soll die Soll-Übersetzung und n_s2 die Drehzahl der Sekundärscheibe eines Variators des stufenlosen Getriebes ist.

4. Verfahren nach Anspruch 3, **dadurch gekennzeichnet, daß** das Druckniveau der geschlossenen Wandlerüberbrückungskupplung dicht oberhalb des Druckwertes betrieben wird, wo eine schlupffreie Übertragung des anstehenden Motormomentes sichergestellt ist, so daß die Reaktionszeiten beim Übergang in den Motordrehzahlführungsbetrieb beim Anfahren minimiert werden.

5. Verfahren nach Anspruch 4, **dadurch gekennzeichnet, daß** das Schließen der Kupplung für Vorwärtsfahrt und der Übergang der Wandlerüberbrückungskupplung in den Motordrehzahlführungsbetrieb durch Einsatz einer Überschneidungsschaltung komplementär ablaufen.

6. Verfahren nach einem der vorangehenden Ansprüche, **dadurch gekennzeichnet, daß** im Schubbetrieb des Fahrzeugs ein Absinken der Motordrehzahl unter der Turbinendrehzahl beim Öffnen der Wandlerüberbrückungskupplung durch eine durch die Fahrstrategie definierte Motordrehzahlvorgabe und Führung der Wandlerüberbrückungskupplung vermieden wird.

7. Verfahren nach Anspruch 6, **dadurch gekennzeichnet, daß** die Motordrehzahlvorgabe bis kurz vor Erreichen der Motorleerlaufdrehzahl auf dem Turbinendrehzahlwert gehalten wird.

8. Verfahren nach Anspruch 7, **dadurch gekennzeichnet, daß** ab einem einstellbaren Zeitpunkt kurz vor Erreichen der Motorleerlaufdrehzahl die Motordrehzahlvorgabe auf einen definierten Wert oberhalb der Motorleerlaufdrehzahl überführt wird.

9. Verfahren nach einem der vorangehenden Ansprüche, **dadurch gekennzeichnet, daß** die Auftrennung des Antriebsstrangs bei Erkennen einer Fehlfunktion der Wandlerüberbrückungskupplung über die Kupplung für Vorwärtsfahrt erfolgt, wobei die Motordrehzahltrajektorie als Vorgabewert für die Schlupfregelung der Vorwärtskupplung dient.

10. Verfahren nach Anspruch 9, **dadurch gekennzeichnet, daß** bei Stillstand des Fahrzeugs die Schlupfregelungsfunktion der Kupplung für Vorwärtsfahrt in einen Standabkopplungsbetrieb übergeht, so daß im Stillstand immer der gleiche Betriebszustand von Vorwärtsfahrkupplung und Wandlerüberbrückungskupplung vorliegt.

11. Verfahren nach Anspruch 9, **dadurch gekennzeichnet, daß** im Fall eines plötzlichen Öffnens der Wandlerüberbrückungskupplung die Kupplung für Vorwärtsfahrt geschlossen wird, wobei kontinuierlich Überwacht wird, ob die Wandlerüberbrückungskupplung im geöffnetem Zustand verbleibt.

12. Verfahren nach einem der vorangehenden Ansprüche, **dadurch gekennzeichnet, daß** während des Motordrehzahlführungsbetriebs der Wandlerüberbrückungskupplung die Verlustleistung kontinuierlich mitberechnet und mit einem vorgegebenen Grenzwert verglichen wird.

13. Verfahren nach Anspruch 12, **dadurch gekennzeichnet, daß** bei Überschreitung des Grenzwertes die Wandlerüberbrückungskupplung geöffnet wird.

14. Verfahren nach Anspruch 13, **dadurch gekennzeichnet, daß** nach Ablauf einer vorgegebenen, den Abkühlvorgang berücksichtigenden Sperrzeit die wandlerüberbrückungskupplung wieder in den Motordrehzahlführungsbetrieb versetzt wird.

15. Verfahren nach Anspruch 12, **dadurch gekennzeichnet, daß** beim Absinken der Differenz zwischen der Motordrehzahl und der Turbinendrehzahl auf einen Wert kleiner als ein vorgegebener Grenzwert, die Wandlerüberbrückungskupplung vollständig geschlossen wird.

**Claims**

1. Method for controlling the engine speed of an engine of a drive train-equipped motor vehicle via a torque converter lockup clutch during the starting and stopping phase of the motor vehicle, with the drive train consisting of a hydrodynamic torque converter, which contains a turbine and a torque converter lockup clutch, a continuously variable transmission and in combination with it further elements comprising a forward clutch and a clutch or brake for reverse driving,
**characterized**
**in that** the closing and opening of the torque converter lockup clutch is used as an implicit function, such as to guarantee optimum comfort: by means of the most asymptotic adjustment possible of the engine and turbine speed gradients during starting and by means of a soft, defined separation of the speed characteristic curves of engine and turbine during stopping; and in that at vehicle standstill the forward clutch is moved into standstill disengaged mode so that the torque converter lockup clutch can be closed fully.

2. Method according to claim 1,
**characterized**
**in that** during starting the torque converter lockup clutch causes the engine speed to approach a defined trajectory, whereby at the end of the trajectory engine and turbine speed are the same.

3. Method according to claim 2,
**characterized**
**in that** the trajectory is defined according to
$$n\_mot\_soll = iv\_soll\ n\_s2$$
whereby n_mot_soll represents the nominal engine speed, iv_soll the nominal ratio and n_s2 the speed of the secondary disk of a variator of the continuously variable transmission.

4. Method according to claim 3,
**characterized**
**in that** the pressure level of the closed torque converter lockup clutch is maintained slightly above the pressure level guaranteeing slip-free transmission of the engine torque, so that the response times during transition to the engine speed are minimized during starting.

5. Method according to claim 4,
**characterized**
**in that** closing of the forward clutch and transition of the torque converter lockup clutch to the engine speed are complementary processes due to the use of an overlap control.

6. Method according to one of the preceding claims,
**characterized**
**in that** in coasting condition of the vehicle, dropping of the engine speed below the turbine speed in response to the opening of the torque converter lockup clutch is prevented by a drive strategy-defined control of engine speed and torque converter lockup clutch.

7. Method according to claim 6,
**characterized**
**in that** engine speed setting is maintained at turbine speed level until shortly before the engine idling speed is reached.

8. Method according to claim 7,
**characterized**
**in that** from a settable point of time shortly before engine idling speed is reached, the engine speed setting is changed to a defined value above the engine idling speed.

**9.** Method according to one of the preceding claims, **characterized in that** separation of the drive train at recognition of a malfunction of the torque converter lockup clutch is effected via the forward clutch, whereby the engine speed trajectory serves as a setting value for the slip control of the forward clutch.

**10.** Method according to claim 9, **characterized in that** at vehicle standstill the slip control function of the forward clutch changes to a standstill disengaged mode, so that at standstill forward clutch and torque converter lockup clutch are always in the same operating condition.

**11.** Method according to claim 9, **characterized in that** in the event of the torque converter lockup clutch suddenly opening, the forward clutch is closed, whereby the torque converter lockup clutch is constantly monitored to check whether it remains in the opened condition.

**12.** Method according to one of the preceding claims, **characterized in that** during engine speed control mode of the torque converter lockup clutch, the power loss is continuously calculated and compared with a specified limit value.

**13.** Method according to claim 12, **characterized in that** the torque converter lockup clutch is opened when the limit value is exceeded.

**14.** Method according to claim 13, **characterized in that** the torque converter lockup clutch is shifted to the engine speed control mode again after expiry of a specified interlock period that considers the cooling period.

**15.** Method according to claim 12, **characterized in that** the torque converter lockup clutch is fully closed when the difference between engine and turbine speed drops to a value smaller than the specified limit value.

**Revendications**

**1.** Méthode de pilotage du système de gestion du régime moteur d'un véhicule automobile équipé d'une chaîne cinématique par l'intermédiaire d'un embrayage de pontage du convertisseur pendant la phase de démarrage et d'arrêt du véhicule automobile, sachant que la chaîne cinématique est composée d'un convertisseur de couple hydrodynamique doté d'une turbine et d'un embrayage de pontage du convertisseur, d'une boîte à variation continue et d'autres éléments associés à celle-ci, qui comprennent un embrayage pour la marche avant et un embrayage ou un frein pour la marche arrière, **caractérisée en ce que** la fermeture et l'ouverture de l'embrayage de pontage du convertisseur soient utilisées en tant que fonctions implicites, et cela de façon à ce que soit garanti un confort optimal, lors de la phase de démarrage, par l'adaptation autant que possible asymptotique des gradients des régimes du moteur et de la turbine, et, lors de la phase d'arrêt, par la séparation douce et définie des lois des régimes du moteur et de la turbine; et **en ce que** à l'arrêt du véhicule l'embrayage prévu pour la marche avant passe à un mode de désaccouplement à l'arrêt, pour que l'embrayage de pontage du convertisseur puisse être fermé complètement.

**2.** Méthode selon la revendication 1, **caractérisée en ce que** lors de la phase de démarrage le régime du moteur est approché par l'embrayage de pontage du convertisseur à une trajectoire définie, sachant que à la fin de la trajectoire le régime du moteur doit être égal au régime de la turbine.

**3.** Méthode selon la revendication 2, **caractérisée en ce que** la trajectoire est définie selon l'équation $n\_mot\_consigne = iv\_consigne \times n\_s^2$, sachant que $n\_mot\_consigne$ est le régime de consigne du moteur, $iv\_consigne$ est le rapport de démultiplication de consigne et $n\_s^2$ est le régime du disque secondaire d'un variateur d'une boîte à variation continue.

**4.** Méthode selon la revendication 3, **caractérisée en ce que** le niveau de pression de l'embrayage de pontage du convertisseur fermé se situe juste au-dessus de la valeur de pression assurant une transmission sans glissement du couple moteur, pour que, pendant la phase de démarrage, les temps de réaction lors du passage au mode de gestion du régime moteur soient réduits au minimum.

**5.** Méthode selon la revendication 4, **caractérisée en ce que** la fermeture de l'embrayage pour la marche avant et le passage de l'embrayage de pontage du convertisseur au mode de gestion du régime moteur, par utilisation d'une commande à chevauchement, se déroulent de façon complémentaire.

**6.** Méthode selon une des revendications précédentes, **caractérisée en ce que** en poussée la baisse du régime moteur au-dessous du régime de la turbine, lorsque l'embrayage de pontage du convertisseur est ouvert, est inhibée par un régime moteur de consigne défini par la stratégie de conduite et par la gestion de l'embrayage de pontage du convertisseur.

**7.** Méthode selon la revendication 6, **caractérisée en ce que** le régime moteur de consigne est maintenu à la valeur du régime de la turbine, et cela jusqu'au moment avant d'atteindre le régime de ralenti du moteur.

**8.** Méthode selon la revendication 7, **caractérisée en ce que** à partir d'un moment réglable, juste avant d'atteindre le régime de ralenti du moteur, le régime moteur de consigne est porté à une valeur définie au-dessus du régime de ralenti du moteur.

**9.** Méthode selon une des revendications précédentes, **caractérisé en ce que** en cas de détection d'une anomalie sur l'embrayage de pontage du convertisseur l'ouverture de la chaîne cinématique s'effectue, pour la marche avant, par l'intermédiaire de l'embrayage, sachant que la trajectoire du régime moteur sert comme valeur de consigne pour le réglage du patinage de l'embrayage de la marche avant.

**10.** Méthode selon la revendication 9, **caractérisée en ce que**, le véhicule étant à l'arrêt, la fonction de réglage du patinage de l'embrayage pour la marche avant passe à un mode de désaccouplement à l'arrêt, assurant que l'on ait à l'arrêt sur l'embrayage pour la marche avant et sur l'embrayage de pontage du convertisseur toujours la même condition de fonctionnement.

**11.** Méthode selon la revendication 9, **caractérisée en ce que** en cas d'une ouverture brusque de l'embrayage de pontage du convertisseur l'embrayage pour la marche avant soit fermé, sachant que le système vérifie en permanence si l'embrayage de pontage du convertisseur reste ouvert.

**12.** Méthode selon une des revendications précédentes, **caractérisée en ce que** l'embrayage de pontage du convertisseur se trouvant au mode de gestion du régime moteur, la perte de puissance est également continuellement calculée et comparée avec une valeur-seuil de consigne.

**13.** Méthode selon la revendication 12, **caractérisée en ce que** lors du dépassement de la valeur-seuil l'embrayage de pontage du convertisseur soit ouvert.

**14.** Méthode selon la revendication 13, **caractérisée en ce que** après écoulement d'un temps de blocage prédéfini, qui tient compte du processus de refroidissement, l'embrayage de pontage du convertisseur passe à nouveau au mode de gestion du régime moteur.

**15.** Méthode selon la revendication 12, **caractérisée en ce que** lors de la réduction de l'écart existant entre le régime du moteur et le régime de la turbine jusqu'à une valeur inférieure à la valeur-seuil prédéfinie, l'embrayage de pontage du convertisseur soit fermé complètement.

Fig. 1

Fig. 2